Europäisches Patentamt

European Patent Office

Office européen des brevets

(19)

(11) Veröffentlichungsnummer: **0 030 929**
**B1**

# (12) EUROPÄISCHE PATENTSCHRIFT

(45) Veröffentlichungstag der Patentschrift:
22.05.85

(51) Int. Cl.⁴: **H 01 J 47/00,** H 01 J 47/02

(21) Anmeldenummer: **80890032.8**

(22) Anmeldetag: **12.03.80**

(54) **Sekundärstandard-Ionisationskammer, insbesondere zur Messung der Energiedosis.**

(30) Priorität: **12.03.79 HU OA000618**

(43) Veröffentlichungstag der Anmeldung:
**24.06.81 Patentblatt 81/25**

(45) Bekanntmachung des Hinweises auf die Patenterteilung:
**22.05.85 Patentblatt 85/21**

(84) Benannte Vertragsstaaten:
**BE CH DE FR GB IT LU NL SE**

(56) Entgegenhaltungen:
**DE - B - 1 156 514**
**FR - A - 1 360 381**
**FR - E - 87 544**
**GB - A - 1 359 322**

**"MEDICAL PHYSICS", Band 4, Nr. 1, Januar/Februar
1977 NEW YORK (US) J.B. SMATHERS et al.:
"Composition of A-150 tissue-equivalent plastic",
Seiten 74-77**

(73) Patentinhaber: **Österreichisches Forschungszentrum
Seibersdorf Gesellschaft m.b.H., Lenaugasse 10,
A-1082 Wien (AT)**

(72) Erfinder: **Duftschmid, Klaus, Dr., Wienerstrasse 116/21,
A-2352 Gumpoldskirchen (AT)**
Erfinder: **Hizo, Jozsef, Dipl.-Ing., 1142 Nezsider 4,
Budapest (HU)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine als Sekundär-Eichstandard benutzbare, mit Luft gefüllte Ionisationskammer für die Bestimmung der Röntgen- und γ-Strahlendosis mit einer sonst allseits dichten Kammer mit einer Luftausgleichsöffnung, einer Aussenelektrode, einer Innenelektrode und einem den Abschluss des Halbteils der Kammer bildenden, elektrisch leitenden Schutzring.

Sekundärstandards sind Messgeräte mit hohen meteorologischen Eigenschaften, die direkt durch Vergleich mit Primärstandards, z.B. den internationalen Primärstandards oder den nationalen Eichnormalen, kalibriert werden. Solche Geräte bedingen eine hohe Messgenauigkeit, Langzeitstabilität und Reproduzierbarkeit.

Zur Erreichung der für Sekundärstandard-Ionisationskammern (SSI) geforderten Langzeitstabilität ist insbesondere eine gute Langzeit-Volumenstabilität erforderlich. Gleichzeitig ist zur Erreichung der erforderlichen Messgenauigkeit neben der Volumenstabilität auch eine hohe Unveränderlichkeit der elektrischen Felder in der Ionisationskammer notwendig, da durch deren Änderungen bei gleich hoher in der Ionisationskammer absorbierter Energiedosis Unterschiede in den als Messgrösse dienenden Ionisationsströmen hervorgerufen werden. Weiters ist es für die Bestimmung der Energiedosis mittels Ionisationskammern erforderlich, weitgehend Luft, Wasser bzw. Gewebe äquivalente Kammerwandmaterialien zu verwenden. Ebenso muss eine weitgehende Energieunabhängigkeit, insbesondere für die Bestimmung der Energiedosis von Strahlengemischen, z.B. infolge von Streustrahlung und/oder von Strahlen mit verschiedener Photonenenergie, gefordert werden. Von Ionisationskammern, die für den Routinegebrauch, insbesondere in der Medizin und im Strahlenschutz bestimmt sind, werden solche Anforderungen nicht oder nur teilweise erfüllt.

Als SSI werden Ionisationskammern mit allseitig geschlossenen Kammerwänden, die gleichzeitig als Aussenelektroden dienen, verwendet. Solche Kammern werden mit Luft, unter normalen Aussenbedingungen, betrieben. Um in der Ionisationskammer die gleichen atmosphärischen Bedingungen wie in der Umgebung herzustellen, befindet sich in der Kammerwand eine kleine Luftausgleichsöffnung. Zur Erzielung der erforderlichen Langzeit-Volumenstabilität wurden bisher SSI nur mit einer Aussenelektrode aus Graphit und mit einer Innenelektrode aus Aluminium hergestellt, da mit anderen, für Ionisationskammern ebenfalls verwendeten Materialien, wie z.B. Gemische aus Polyäthylen und Polyformaldehyd (FR-PS 1 360 381) die mechanische Stabilitätsforderung nicht erfüllt werden kann.

Graphit-SSI werden so optimiert, dass sie für die Eichung gegenüber den als Primärstandard verwendeten Freiluftkammern geeignet sind, wobei als Messgrösse die Ionendosis (Exposure) dient.

Seit der Neufestlegung der internationalen Masseinheiten des SI-Systems ist für die Strahlendosis die auf die Luftionisation zurückführbare Messeinheit Röntgen (R) gestrichen. Als neue Einheit wurde die Gray-Einheit (Gy) festgelegt, in welcher zum Unterschied von der in Röntgen gemessenen Ionendosis, die jeweils absorbierte Energiedosis gemessen wird.

Da die Kammerwände der bisher als Sekundärstandard verwendeten Graphit-Ionisationskammern weder aus Luft, Wasser oder Gewebe äquivalentem Material bestehen, ist die Eichung der gegenüber den Freiluftkammern kalibrierten Graphitkammern für die Dosisbestimmung in Wasser bzw. Gewebe aufgrund der materialbedingten veränderlichen Energieabhängigkeit sehr erschwert. Dies wird dadurch verursacht, dass einerseits die effektive Ordnungszahl von Graphit weit von der des menschlichen Gewebes entfernt ist und anderseits bei Messungen in Phantomen beträchtliche Fehler auftreten können, da diese Kammern im Phantom ihre Energieabhängigkeit, welche für Freiluftmessungen optimiert ist, infolge der durch die Kombination von Graphitaussenwand und Aluminium-Innenelektrode bedingten Inhomogenität beträchtlich verändern. Aluminium, welches mit seiner effektiven Ordnungszahl höher als Luft oder Gewebe liegt, wird zur Kompensation der zu niedrigen Ordnungszahl von Graphit verwendet. Diese Kompensation ist jeweils nur für einen geringen Energiebereich möglich. Für Gammastrahlung sind zur Erreichung des für die Messung erforderlichen Sekundärelektronengleichgewichtes Wandstärken von einigen mm erforderlich, welche anderseits bei der Messung von Röntgenstrahlung, aufgrund deren niederen Energie, bereits zu untragbar hohen Absorptionsverlusten führen. Die bisher verwendeten Graphit-SSI sind für Röntgenstrahlung optimiert und benötigen daher für die Messung von Gammastrahlung zusätzliche Wandverstärkungskappen. Durch diese Art der Messung werden jedoch unzulässige Messungenauigkeiten, insbesondere in den Grenzbereichen, bewirkt.

Ein weiterer Nachteil in der Konstruktion der bisher verwendeten Ionisationskammern ist die Entstehung unkontrollierbarer Messfehler durch elektrische Phänomene an der Grenzschicht zwischen den im Halsteil der Kammer voneinander elektrisch getrennten Elektroden. In Abhängigkeit von der Luftfeuchtigkeit und Temperatur im Inneren der Kammer ändert sich das elektrische Potential dieser Isolierschicht, wodurch das elektrische Feld im Inneren der Kammer verzerrt wird, was zu einer Veränderung des Ionisationsstromes führt. Diese für normale Ionisationskammern im allgemeinen vernachlässigbaren Messfehler können bei Sekundärstandards nicht in Kauf genommen werden.

Aufgabe der Erfindung ist es, eine für die Bestimmung der Energiedosis geeignete SSI aus einem Luft, bzw. Gewebe oder Wasser äquivalenten Wandmaterial zu schaffen, wobei dieses Material die notwendige Langzeitvolumenstabilität des Wandmaterials ermöglicht. Weiters soll durch die Konstruktion der SSI erreicht werden, dass in einem weiten Energiebereich zwischen 20 keV und 1,3 MeV für Photonenstrahlung Energiedosismengen hoher Genauigkeit ohne zusätzliche Wandverstärkungen durchgeführt werden können und die obenerwähnten Messfehler durch Feldverzerrung infolge atmosphärisch bedingter elektrischer Phänomene an der Oberfläche der Kammerisolation wegfallen. Die Aufgabe wird erfindungsgemäss dadurch gelöst, dass a) die höchstens 3 mm dicke Kammerwand (1) aus einem Material besteht, welches zumindest 85 Gew.-% Polyacetal oder einer Mischung aus Polyacetal und Polytetrafluoräthylen mit bis zu 20 Gew.-% Polytetrafluoräthylen enthält, b) die wahlweise Luft-, Gewebe- oder Wasseräquivalenz der Konisationskammer durch den Zusatz von maximal 15 Gew.-% Zuschlagstoffen in Form von Kalziumoxid, und/oder Aluminium, und/oder Aluminiumoxid und/oder Kohlenstoff zum Kammerwandmaterial eingestellt wird, c) die Aussenelektrode (2) als Überzug auf der Innenseite der Kammerwand (1) aufgebracht ist und d) zur Kompensation von Verlusten durch Absorption niederenergetischer Photonen aus einem Material besteht, welches zumindest ein Element mit einer Ordnungszahl grösser als 8 enthält und e) der auf einem axial durch den Halsteil (3) geführten, elektrisch nicht leitenden Schaft (6) befindliche Endabschnitt des als Innenelektrode (10) dienenden, elektrisch leitenden Überzuges in den Halsteil (3) hineinragt und die Aussenelektrode (2) über die Innenelektrode (10) um eine vorgegebene Länge hinausgehend in den Halsteil (3) hineinragt und ein mit dem Schutzring (4) elektrisch verbundener, von der Innenelektrode (10) elektrisch getrennter, elektrisch leitender Überzug (7) auf dem im Halsteil (3) der Kammer befindlichen Teil des Schaftes (6) sich teilweise mit dem in den Halsteil (3) der Kammer erstreckenden Teil der Aussenelektrode (2) überlappt.

Es ist bekannt, durch Mischung von Materialien mit verschiedenen Ordnungszahlen Substanzen mit einer der Luft, dem Wasser oder Gewebe entsprechenden, effektiven Ordnungszahl herzustellen. So wurden z.B. nach der CH-PS 465 073 aus 85% Beryllium und 15% Aluminium, bzw. nach der DE-AS 1 156 514 aus 82% Bortrioxid ($B_2O_3$), 13,6% Lithiumoxid ($Li_2O$) und 4,4% Berylliumoxid (BeO) derartige Materialien hergestellt. Diese weisen die für die Herstellung von SSI erforderlichen mechanischen Stabilitätseigenschaften auf. In Hinblick auf die geforderte Materialäquivalenz, welche sich insbesondere auch auf die Energieabhängigkeit zwischen Ionendosis und Energiedosis auswirkt, erfüllen diese Materialien nicht die für Sekundärstandards geforderte Genauigkeit, da die Ordnungszahlen der einzelnen Gemischkomponenten zu unterschiedlich von jener der Komponenten von Wasser, Luft oder Gewebe sind.

Bekannt sind weitgehend luft-, gewebe- bzw. wasseräquivalente Ionisationskammern aus Kunststoffgemischen, siehe z.B. FR-A-1 360 381 und DE-PS 386 601. Aus der FR-A-1 360 381 sind für β-, γ-, Röntgenstrahlen und schnelle Neutronen gewebeäquivalente Ionisationskammern mit allseits geschlossener Kammerwand aus einem Grundstoff aus Polytetrafluoräthylen bzw. Polyäthylen mit einer Aussen- und Innenelektrode, welche aus einem Überzug aus kollodialem Graphit oder einer 0,1 μm Al-Schicht (entspricht einem Flächengewicht von 0,027 mg/cm²) bestehen, und mit einem Schutzring in der Durchführung der Innen- durch die Aussenelektrode bekannt. Die Einstellung der Gewebeäquivalenz des Grundmaterials Polyäthylen für α-, β- und Photonenstrahlung und für schnelle Neutronen erfolgt durch die Zugabe von 10 bis 15 Gew.-% Polyformaldehyd und 20 bis 25 Gew.-% einer Sauerstoff- oder Wasserstoffverbindung von Magnesium, bsp. MgO. Wird auf die Gewebeäquivalenz für schnelle Neutronen verzichtet, wird ein Gemisch aus 50 bis 60 Gew.-% Polytetrafluoräthylen mit Kohlenstoff vorgeschlagen. Weder reines Polyäthylen oder Polytetrafluoräthylen noch die Mischungen mit Polyformaldehyd plus Zuschlagstoffe, wie z.B. 22,5% MgO, erfüllen die an das Kammerwandmaterial von SSI zu stellenden hohen mechanischen Stabilitätsforderungen. Ein weiterer Nachteil in der Verwendung von Polyäthylen oder Polytetrafluoräthylen als Grundstoff für das Kammerwandmaterial besteht darin, dass relativ hohe Prozentsätze an Zuschlagstoffen wie MgO oder anderen Sauerstoff- bzw. Wasserstoff-Magnesiumverbindungen oder Kohlenstoff zur Einstellung der jeweils gewünschten Gewebe-, Luft- oder Wasseräquivalenz für Photonen bzw. γ-Strahlung erforderlich sind. Die in der FR-A-1 360 381 angeführte Ausführungsform der Elektroden als dünne leitende Beschichtung aus Kolloidgraphit oder Aluminium ist so gewählt, dass sie die Charakteristik der Ionisationskammer nicht verändert. Diese Elektroden ermöglichen daher nur rein zufällig in Verbindung mit einer entsprechenden Zusammensetzung des Wandmaterials die Kompensation der Energieempfindlichkeit auf Absorptionsverluste für niederenergetische γ- bzw. Röntgenstrahlung, welche ein Erfordernis für SSI darstellt.

Die Erfindung beruht auf der Erkenntnis, dass mit dem Kunststoff Polyacetal $(CH_2O)_n$, ein Homo- und Copolymerisat von Formaldehyd und höheren Aldehyden, ein für die Herstellung von SSI-Kammerwänden geeigneter Grundstoff gefunden wurde, da er einerseits die erforderliche mechanische Stabilität besitzt und andererseits neben Kohlenstoff die in Luft, Gewebe bzw. Wasser enthaltenden Elemente Sauerstoff und Wasserstoff enthält.

Polyacetal, z.B. unter dem Handelsnamen DELRIN erhältlich, besitzt ausgezeichnete mechanische Eigenschaften, insbesondere eine hohe mechanische Festigkeit, welche bei der Verwendung als Wandmaterial für SSI eine gute Volumenstabilität ermöglicht. Das Material kann in üblicher Weise durch Spritzguss verarbeitet werden, so dass z.B. auch Kugelionisationskammern mit Durchmessern von 1 bis 30 cm herstellbar sind. Ein weiterer Vorteil dieses Materials ist es, dass sein elektrischer Oberflächenwiderstand grösser als $10^{16}$ Ohm ist. Weiters enthält es aufgrund seiner chemischen Zusammensetzung mehr als 50%

H₂O, was für die Einstellung der Materialäquivalenz, insbesondere für die Verwendung als Therapiedosimeter im Wasserphantom, vorteilhaft ist.

Wesentlich ist insbesondere, dass durch die Zugabe von bis zu 20 Gew.-% Polytetrafluoräthylen (PTFE) zu Polyacetal die für die Verwendbarkeit als Wandmaterial von SSI erforderliche mechanische Stabilität nicht nachteilig beeinflusst wird, jedoch durch diese fluorhältige Materialkomponente eine Substanz mit einer Ordnungszahl die nahe jener von Stickstoff und Sauerstoff liegt eingebracht wird, so dass eine bessere Gewebe, Luft bzw. Wasseräquivalenz auf der Basis eines derartigen Kunststoffgemisches durch Zugabe geringer Zusätze von Stoffen höherer Ordnungszahl, z.B. Aluminiumoxid oder Kalziumoxid, erzielt werden kann. So wird z.B. aus einem Grundstoff aus Polyacetal mit 20 Gew.-% Polytetrafluoroethylen eine gewebe- bzw. wasseräquivalente Mischung aus 97 Gew.-% Grundstoff mit 3 Gew.-% CaO, oder eine luftäquivalente Mischung aus 99 Gew.-% Grundstoff und 1 Gew.-% CaO hergestellt. Weiters können als Zuschlagstofe beispielsweise reines metallisches Aluminium oder Gemische aus Aluminiumoxid und Kohle in feinpulverisierter Form dem Polyacetalgranulat als Ausgangsmaterial für eine Spritzgussverarbeitung beigegeben werden.

Da im ganzen Anwendungsbereich der SSI in der Kammerwand ein Sekundärelektronengleichgewicht hergestellt werden muss, wird die Stärke der Polyacetalwand durch das obere Ende des Energiebereiches bestimmt, in dem die SSI betrieben werden soll. Für eine Energiebereichsgrenze von 1,3 MeV (Gammastrahlung von 60 Co) ist eine Wandstärke von mindestens 2 mm erforderlich.

Bei solchen Wandstärken treten jedoch für niederenergetische Photonenstrahlen bereits starke Absorptionsverluste auf. Die Kompensation solcher Verluste bei allseits geschlossenen, mit Zählgas im Proportionalbereich betriebenen Ionisationszählkammern durch Aufbringen einer als Aussenelektrode wirkenden Schicht von mindestens 0,05 maximal jedoch 1 mg/cm² aus Materialien einer hohen Ordnungszahl, wie Aluminium, Kupfer oder Nickel an der Innenwand der Kammer wird in DE-AS 1 156 514 beschrieben.

Während es in im Proportionalbereich arbeitenden Kammern durch die angelegten elektrischen Felder durch Stossionisation zu einer Stromverstärkung der jeweils durch die Strahlung ausgelösten Stromimpulse kommt, werden in im Sättigungsbereich betriebenen Ionisationskammern die durch die Strahlung erzeugten Ionenpaare gesammelt ohne dass es zu einer Stossionisation kommt. Aufgrund dieser unterschiedlichen Mechanismen überraschend wurde festgestellt, dass auch durch eine an der Innenwand der Kammer befindliche und als Aussenelektrode dienende dünne Schicht eines leitenden Materials mit zumindest einer Komponente mit höherer Ordnungszahl als 8, insbesondere in Form einer maximal 0,05 mg/cm² betragenden Aluminiumschicht, auf der maximal 3 mm dicken Kammerwand eine für die Verwendung als SSI geeignete weitgehende Kompensation der niederenergetischen Absorptionsverluste gewährleistet ist. Die Kompensation der Absorptionsverluste für niederenergetische Photonenstrahlung durch die Kammerwand, mit Hilfe z.B. einer dünnen Aluminiumschicht, basiert auf folgenden Überlegungen:

a) Die effektive Ordnungszahl der Kompensationsschicht ist grösser als die des Kammerwandmaterials, so dass eine relativ zum Kammerwandmaterial verstärkte Erzeugung von Sekundärelektronen durch die Wechselwirkung (Photoeffekt) der niederenergetischen Photonenstrahlung mit der Kompensationsschicht auftritt.

b) Die Dicke der Kompensationsschicht ist dünn genug, dass höherenergetische Photonenstrahlung praktisch unbeeinflusst bleibt und für diese die Sekundärelektronenproduktion weitestgehend nur im Kammerwandmaterial erfolgt.

c) Der elektrische Oberflächenwiderstand der Kompensationsschicht ist kleiner als 10⁶ Ohm, so dass eine ausreichend leitfähige Schicht auf der inneren Kammeroberfläche besteht und Feldverzerrungen durch Ladungsverschiebungen im Isolatormaterial verhindert werden.

Das Material für die Kompensationsschicht muss chemisch stabil sein und am Wandmaterial gut haften, wobei die Stärke der Kompensationsschicht von der Sollstärke nicht mehr als ±2,5% abweichen darf.

Aus den angeführten Überlegungen ergibt sich, dass Aluminium als Kompensationsmaterial besonders geeignet ist. Dieses Metall kann durch Aufdampfen im Vakuum bzw. Elektronenstrahl-Zerstäuben in gut kontrollierter Weise auf die inneren Oberflächen der SSI aufgebracht werden.

Durch optimale Dimensionierung der Schichtdicke lässt sich der Absorptionsverlust für weiche Gammastrahlung soweit kompensieren, dass eine ausgezeichnete Energieabhängigkeit von besser als ±2% zwischen 0,02 MeV und 1,3 MeV erreicht wird.

Durch die letzte kennzeichnende Merkmalsgruppe werden jene durch atmosphärisch bedingte Veränderungen des elektrischen Feldes innerhalb der Ionisationskammer verursachten veränderlichen Fehler behoben, die für eine SSI unzulässig sind. Durch Phänomene auf der Oberfläche des Isoliermaterials, welches im Halsteil der Ionisationskammer die äussere Elektrode von der Innenelektrode trennt, werden bei der Messung Fehler unterschiedlichen Masses verursacht. Abhängig vom Feuchtigkeitsgehalt und von der Temperatur der Luft nimmt das elektrische Potential dieser Isolierschicht unterschiedliche Werte an, so dass das elektrische Feld im Inneren der Ionisationskammer verzerrt wird. Das Ausmass der jeweiligen Verzerrung hängt von der Zeit und der Temperatur ab und beeinflusst den Ionisationsstrom der inneren Elektrode. Für normale Ionisationskammern ist diese verzerrende Wirkung ohne Belang, bei SSI jedoch ein ausschliessender Faktor, da Eichnormale nicht mit veränderlichen Fehlern hergestellt werden dürfen. Diese verzerrende Wirkung auf das elektrische Feld infolge der Veränderungen der Elektrodenisolation wird erfindungsgemäss durch das Zusammenwirken eines besonders geformten Schutzringes mit der ebenfalls besonders ausgebildeten Aussen- bzw. Innenelektrode beseitigt. Hierzu wird der als Aussenelektrode wirkende leitende Überzug, z.B. aus Aluminium, auf der inneren Kammerwand in den Halsteil der Kammer fortgesetzt, so dass er über den Endabschnitt des elektrisch leitenden, als Innenelektrode dienenden und auf einem koaxial zum Halsteil liegenden, nicht leitenden Schaft befindlichen Überzugs hinausragt. Ausserdem wird eine von der Innenelektrode z.B. durch eine Nut elektrisch getrennte leitende Fläche auf dem Schaft ausgebildet, die mit dem Schutzring verbunden ist und somit als Fortsetzung des Schutzringes dient. Diese Nut liegt gegenüber jenem Teil der Aussenelektrode der in den Halsteil der SSI hineingeführt ist. Bei dieser Konstruktion kann die Kammerisolation höchstens das elektrische Feld des inneren Überzuges des Halsteiles und der mit dem Schutzring verbundenen Fläche beeinflussen. Dies verursacht jedoch keine Wirkung auf den Ionisationsstrom der Innenelektrode.

Im folgenden wird die Erfindung an Hand eines Ausführungsbeispieles mit Hilfe der Zeichnungen 1 bis 4 näher erläutert.

Fig. 1 zeigt einen Querschnitt durch ein Ausführungsbeispiel der erfindungsgemässen SSI.

Fig. 2 zeigt einen vergrösserten Ausschnitt des Halsteiles der in Fig. 1 dargestellten Kammer.

Fig. 3 und 4 sind Darstellungen des Halsteiles bisher herkömmlicher Ionisationskammern, wobei die feldverzerrende Wirkung der Oberfläche der Kammerisolation veranschaulicht wird.

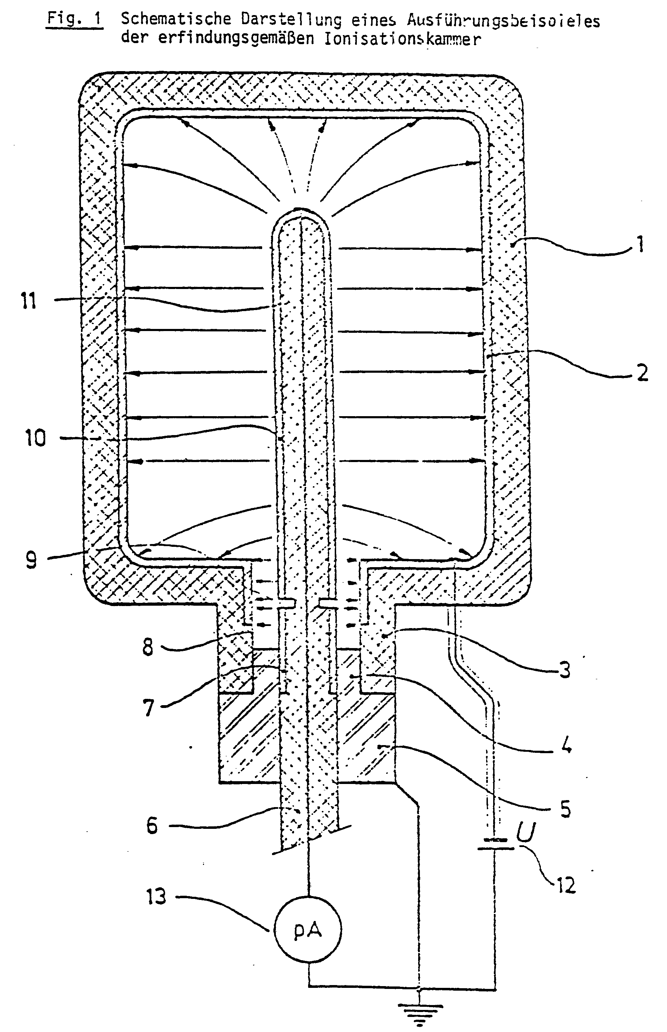

Die in Fig. 1 gezeigte Ionisationskammer hat eine von einer zylindrischen Wand (1) gebildete Kammer, auf deren inneren Fläche die Aussenelektrode der Ionisationskammer als dünner Aluminiumüberzug (2) aufgebracht ist. Der Halsteil (3) der Kammer ist mit einem aus elektrisch leitenden Material bestehenden Schutzring (4) verbunden, dessen Schulterteil (5) sich dicht an die innere Fläche des Halsteiles (3) anschliesst. Die zwischen den Enden des Aluminiumüberzuges (2) und des Schutzringes (4) befindliche Fläche (8) des Halsteiles (3) isoliert den Aluminiumüberzug (2) vom geerdeten Schutzring (4). Im Inneren des Schutzringes (4) ist ein aus elektrisch isolierendem Material hergestellter Schaft (6) angeordnet, der am unteren Teil seiner Oberfläche einen elektrisch leitenden Überzug (7) besitzt. Der untere Abschnitt des Überzuges (7) steht mit dem Schutzring (4) in Kontakt. Die zylindrische Fläche des Überzuges (7) ist mit der inneren Fläche des Halsteiles (3) koaxial. Am Schaft selbst ist oberhalb des Überzuges (7) im Bereich der elektrisch leitenden Oberfläche des Halsteiles (3) eine umlaufende Nut (9) ausgebildet, wodurch die Innenelektrode (10), welche durch den oberhalb der Nut (9) auf dem Schaft (6) befindlichen elektrisch leitenden Überzug gebildet wird, vom Überzug (7) isoliert ist. Im Inneren des Schaftes (6) verläuft eine Leitung (11), die mit der Innenelektrode verbunden ist und zur Ableitung des elektrischen Messsignals dient.

Fig. 1 zeigt auch den elektrischen Anschluss der Ionisationskammer. Zwischen dem die Aussenelektrode bildenden Aluminiumüberzug (2) und Erde ist eine Spannungsquelle (12) geschaltet. Der Ionisationsstrom wird mit einem zwischen dem geerdeten Schutzring (4) und der Innenelektrode (10) liegenden Picoamperemeter (13), vorzugsweise einem digitalen Stromintegrator, gemessen.

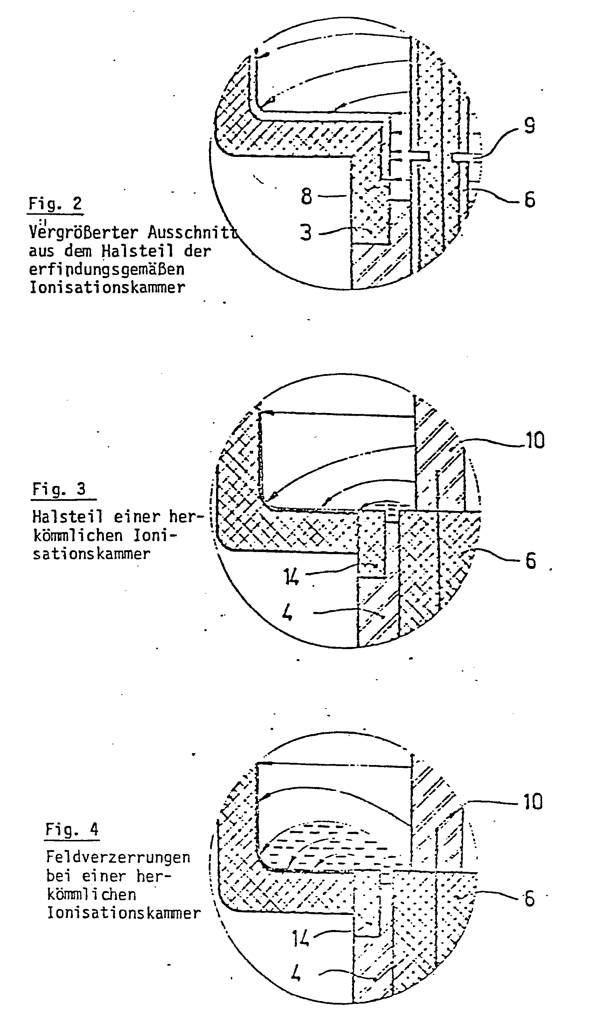

In Fig. 2, welche die Umgebung des Halsteiles (3) vergrössert darstellt, ist ersichtlich, dass die Nut (9) in den mittleren Teil der leitenden inneren Oberfläche des Halsteiles (3) fällt und dass letztere die beiden durch die Nut (9) voneinander elektrisch getrennten, leitenden zylindrischen Flächen des Schaftes (6) koaxial umgibt.

In Fig. 3 und 4 ist zum Vergleich eine bisher bekannte Ausführung des Halsteiles von Ionisationskammern mit Schutzring dargestellt. Der Halsteil der Kammer wird durch einen isolierenden Ring (14) gebildet, der an den Schutzring (4) anschliesst. Im Inneren des Schutzringes verläuft der Schaft (6), welcher an die aus Metall hergestellte Innenelektrode (10) anschliesst, deren Unterkante mit der unteren Kammerwand abschliesst. Die Kammer wird nach unten in der Mitte von der Stirnfläche des isolierenden Ringes (14) und des Schaftes (6) getrennt, zwischen denen ein ringförmiger Spalt besteht.

Für die stabile, von äusseren atmosphärischen Wirkungen unabhängige Funktion der Kammer und damit für die für SSI erforderliche gute Reproduzierbarkeit der Messergebnisse ist eine Vorbedingung, dass sich das Feld der elektrischen Kraftlinien zwischen der Aussenelektrode (2) und der Innenelektrode (10) nicht ändert. Dies wird durch den in Fig. 2 dargestellten erfindungsgemässen Abschluss der SSI gewährleistet. Aus dem elektrischen Anschlussdiagramm in Fig. 1 geht hervor, dass die am Picoamperemeter (13) anstehende Spannung im Vergleich zu der der Spannungsquelle (12) vernachlässigbar gering ist. Deshalb können der Überzug (7) und die von diesem mittels der Nut (9) isolierte Innenelektrode (10) im Hinblick auf den Kraftlinienverlauf als Äquipotentialfläche angesehen werden. Im inneren, ringförmigen Luftspalt des Halsteiles (3) ergibt sich eine homogene Kraftlinienverteilung, wobei die Ebene des Kraftlinienfeldes zur Ebene der Nut (9) parallel ist, was bedeutet, dass durch das Vorhandensein der Nut (9) keine Feldverzerrung entsteht. Wenn sich infolge der Änderung der relativen Luftfeuchte die Oberflächenleitfähigkeit des auf der inneren Oberfläche des Halsteiles (3) zwischen der Aluminiumschichte (2) und dem Schutzring (4) liegenden isolierenden Abschnittes ändert, wird das mit dem Picoamperemeter (13) als Stromwert erfasste Messsignal nicht beeinflusst.

Demgegenüber kann sich wie in Fig. 3 und 4 gezeigt, in der bisher üblichen Ausführungsform des Halsteiles von Ionisationskammern mit Schutzring, durch eine Änderung der Luftfeuchtigkeit die Oberflächenleitung auf der Stirnseite des isolierenden Ringes (14) ändern, wodurch das elektrische Feld im Inneren der Kammer in unterschiedlichem Masse verzerrt wird und sich dadurch auch das die Energiedosis repräsentierende Messsignal ändert.

Durch die erfindungsgemässe Ausbildung des Halsteiles wird ermöglicht, dass durch Druck- und Feuchtigkeitsänderungen im inneren Luftraum der Kammer keine veränderlichen Messunsicherheiten verursacht werden.

Wichtig für die Verwendung von Eichnormalen ist die Überprüfung ihrer Stabilität bzw. Verwendbarkeit. Für diese Überprüfung sind verschiedene Verfahren bekannt, z.B. DE-PS 703 633, bei welcher die zu überprüfende Ionisationskammer in ein von aussen auf sie einwirkendes Strahlenfeld gebracht wird. Nachteilig bei diesem Verfahren wirken sich einerseits die aufgrund der benötigten hohen Radioaktivität der Prüfstrahler erforderlichen Strahlenschutzmassnahmen aus, ebenso die hohen Anforderungen an die Reproduzierbarkeit der Proben-Ionisationskammergeometrie, um die für die Prüfung von SSI erforderliche Prüfgüte zu erzielen.

Wesentlich geringere Mengen an radioaktiven Strahlern für die Prüfung werden dann benötigt, wenn diese im Inneren der zu prüfenden Ionisationskammer angebracht sind. So ist z.B. ein Verfahren bekannt, GB-PS 1 359 322, bei welchem $^{241}$Am in das Zentrum einer kugelförmigen Ionisationskammer gebracht wird. Der Prüfstrahler befindet sich in einem in der Ionisationskammer angeordneten Führungsrohr und kann mittels einer Halterung in einer Bleiabschirmung festgehalten werden. Für die Überprüfung der Kammer wird diese Halterung magnetisch geöffnet und unter Einwirkung der Schwerkraft der Prüfstrahler durch das Führungsrohr in das Zentrum der Ionisationskammer gebracht. Bei dieser Methode wird die Strahlung des Prüfstrahlers optimal für die Prüfung ausgenutzt. Des weiteren werden an die Reproduzierbarkeit der Proben-Ionisationskammergeometrie nicht so hohe Forderungen wie bei aussenliegenden Prüfstrahlern gestellt. Nachteilig wirkt sich jedoch aus, dass der Prüfstrahler permanent in der Ionisationskammer enthalten ist, so dass die für radioaktive Stoffe einzuhaltenden Strahlenschutzmassnahmen auch für die Ionisationskammer anzuwenden sind. Darüber hinaus kann nur ein Prüfstrahler mit bestimmtem Strahlenspektrum verwendet werden, so dass nicht an Hand mehrerer Prüfpunkte z.B. der gesamte Energiebereich bzw. Dosisbereich überprüft werden kann.

Diese Nachteile werden durch eine geringfügige Änderung in der erfindungsgemässen Kammerkonstruktion dadurch beseitigt, dass der radioaktive Prüfstrahler durch ein Rohr von ausserhalb der SSI in das Innere der Innenelektrode eingebracht wird. Eine solche Anordnung besitzt den prinzipiellen Vorteil, als Prüfstrahler mehrere Strahlenquellen mit geringer Aktivität, z.B. 1 mCi $^{241}$Am, verwenden zu können und infolge der zentralen Geometrie sehr stabile Prüfbedingungen zu erhalten, da geringe Lageänderungen des Prüfstrahlers im Zentrum der Ionisationskammer keine Änderung der Ionisation im Innenraum und somit des Messignals bewirken.

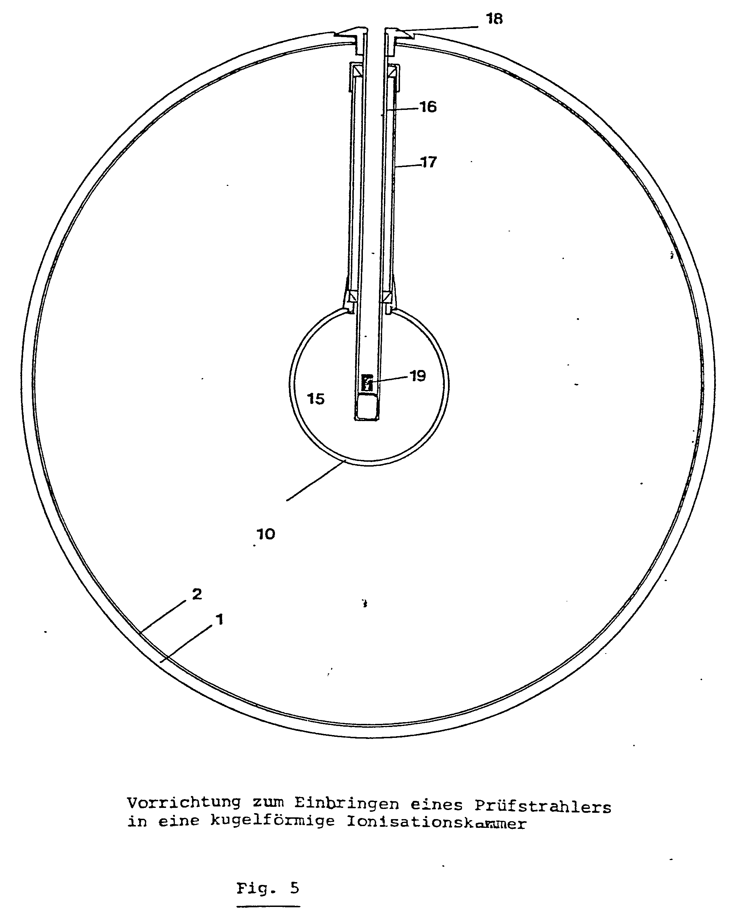

In Fig. 5 ist als Beispiel eine kugelförmige SSI für Strahlenschutzmessungen dargestellt, welche infolge ihres grossen Innenvolumens (Durchmesser ca. 30 cm) eine zur Messung der natürlichen Umgebungsstrahlung ausreichende Messempfindlichkeit besitzt. Die Innenelektrode besteht bei dieser Ausführung aus einer Hohlkugel (15), durch die von der Oberseite der Kammer ein Aluminiumröhrchen (16) als Führungsrohr für den Prüfstrahler (19) hineinragt. Da das Führungsrohr (16) nicht als Verlängerung der Innenelektrode (15) wirken soll, ist es durch das Schirmrohr (17) elektrisch abgeschirmt und übt somit keinen Einfluss auf die elektrischen Feldlinien im Inneren der Kammer aus. Der Prüfstrahler (19) wird durch das Ansatzstück (18) in das Führungsrohr (16) eingebracht und verbleibt nur während der Prüfmessung im Inneren der Kammer.

Bei richtiger Wahl der Dicke des Gewebe, Wasser bzw. Luft äquivalenten Materials der Kammerwand und der Dicke der Absorptionsverlustkompensationsschicht, z.B. aus Aluminium, kann die erfindungsgemässe SSI in einem Bereich von 20 keV bis 1,5 MeV Photonenstrahlung mit für Sekundärstandards vernachlässigbarer geringer Energieabhängigkeit betrieben werden. Die Dicke der Kammerwand (1) hängt mit der von der Ionisationskammer aufnehmbaren Energiebandbreite zusammen. Ein breiter Energiebereich ist mit einer Wandstärke von 2 bis 3 mm erreichbar. Die Dicke des z.B. Aluminiumüberzuges (2) kann in Abhängigkeit von dem Material der Kammerwand, der Wandstärke und der Messspezifität variiert werden. Der Überzug wird mit bekannten Verfahren zur Überzugsbildung in gleichmässiger Dicke auf die innere Wand der Kammer aufgebracht. Der Überzug darf für Aluminium höchstens ein Flächengewicht von 0,05 mg/cm² haben.

**Patentansprüche**

1. Als Sekundär-Eichstandard benutzbare, mit Luft gefüllte Ionisationskammer für die Bestimmung der Röntgen- und γ-Strahlendosis, bestehend aus einer Kammer (1) mit einer Luftausgleichsöffnung in der sonst allseits dichten Kammer, einer Aussenelektrode (2), einer Innenelektrode (10) und einem den Abschluss des Halsteiles (3) der Kammer (1) bildenden, elektrisch leitenden Schutzring (4), dadurch gekennzeichnet, dass

a) die höchstens 3 mm dicke Kammerwand (1) aus einem Material besteht, welches zumindest 85 Gew.-% Polyacetal oder einer Mischung aus Polyacetal und Polytetrafluoräthylen, mit bis zu 20 Gew.-% Polytetrafluoräthylen, enthält,

b) die wahlweise Luft-, Gewebe- oder Wasseräquivalenz der Ionisationskammer durch den Zusatz von maximal 15 Gew.-% Zuschlagstoffen in Form von Kalziumoxid, und/oder Aluminium, und/oder Aluminiumoxid und/oder Kohlenstoff zum Kammerwandmaterial, eingestellt wird,

c) die Aussenelektrode (2) als Überzug auf der Innenseite der Kammerwand (1) aufgebracht ist und

d) zur Kompensation von Verlusten durch Absorption niederenergetische Photonen aus einem Material besteht, welches zumindest ein Element mit einer Ordnungszahl grösser als 8 enthält, und

e) der auf einem axial durch den Halsteil (3) geführten, elektrisch nicht leitenden Schaft (6) befindliche Endabschnitt des als Innenelektrode (10) dienenden, elektrisch leitenden Überzuges in den Halsteil (3) hineinragt und die Aussenelektrode (2) über die Innenelektrode (10) um eine vorgegebene Länge hinausgehend in den Halsteil (3) hineinragt und ein mit dem Schutzring (4) elektrisch verbundener, von der Innenelektrode (10) elektrisch getrennter, elektrisch leitender Überzug (7) auf dem im Halsteil (3) der Kammer befindlichen Teil des Schaftes (6) sich teilweise mit dem in den Halsteil (3) der Kammer erstreckenden Teil der Aussenelektrode (2) überlappt.

2. Ionisationskammer nach Anspruch 1, dadurch gekennzeichnet, dass die Aussenelektrode (2) in Form einer Aluminiumschicht mit einem Flächengewicht nicht grösser als 0,05 mg/cm² ausgebildet ist.

3. Ionisationskammer nach Anspruch 1 oder 2, dadurch gekennzeichnet, dass die Kammerwand (1) höchstens 10 Gew.-% Aluminium als Zuschlagstoff enthält.

4. Ionisationskammer nach Anspruch 1 oder 2, dadurch gekennzeichnet, dass die Kammerwand (1) Aluminiumoxid und Kohlenstoff als Zuschlagstoff enthält, wobei die Menge des Aluminiumoxids höchstens 20 Gew.-% des Zuschlagstoffgemisches beträgt.

5. Ionisationskammer nach Anspruch 1 oder 2, dadurch gekennzeichnet, dass die Kammerwand (1) maximal 5 Gew.-% Kalziumoxid als Zuschlagstoff enthält.

6. Ionisationskammer nach einem der Ansprüche 1 bis 5, dadurch gekennzeichnet, dass ein radioaktiver Prüfstrahler (19), insbesondere ein Prüfstrahler mit ²⁴¹Am, von ausserhalb in das Innere der Innenelektrode (10) gebracht werden kann.

7. Ionisationskammer nach Anspruch 6, dadurch gekennzeichnet, dass zum Einbringen des Prüfstrahlers (19) in die Innenelektrode (10) ein mittels eines Schirmrohres (17) elektrisch abgeschirmtes Führungsrohr (16) angeordnet ist.

8. Ionisationskammer nach einem der Ansprüche 1 bis 7, dadurch gekennzeichnet, dass die Kammerwand (1) hohlkugelförmig ausgebildet ist und die Innenelektrode (10) als elektrisch leitender Überzug auf einer zur Kammerwand konzentrischen, vorteilhafterweise hohlen, Kugel (15) ausgeführt ist.

## Claims

1. An air-filled ionization chamber usable as a secondary standard for measuring the energy dose of X and gamma radiation, consisting of a chamber (1) with an opening for atmospheric equalization in the otherwise completely tight chamber, an external electrode (2), an internal electrode (19), and an electrically conducting protective ring (4) at the end of the neck (3) of the chamber (1), in which

a) the chamber wall (1), no more than 3 mm thick, is made of a material containing at least 85% polyacetal by weight or a mixture of polyacetal and polytetrafluoroethylene, the latter with up to 20% polytetrafluoroethylene by weight,

b) the air, tissue or water equivalence, as desired, is achieved through the addition of a maximum of 15% by weight of additives in the form of calcium oxide, and/or aluminium, and/or aluminium oxide, and/or carbon to the chamber wall material,

c) the external electrode (2) is applied as a coating on the inner side of the chamber wall and

d) consists of a material containing at least one element with a nuclear charge number of more than 8 to compensate losses due to the absorption of low-energy photons, and

e) the end section of the electrically conducting coating serving as the internal electrode (10), applied on an electrically non-conducting shaft extending axially through the neck (3), protrudes into the neck (3), and the external electrode (2) protrudes into the neck (3) thereby exceeding the internal electrode (10) by a given length, and an electrically conducting coating (7) on the section of the shaft (6) that is in the chamber neck (3), electrically connected to the protective ring (4) and electrically separated from the internal electrode (10), partly overlaps with the section of the external electrode (2) that protrudes into the chamber neck (3).

2. Ionization chamber according to Claim 1, in which the external electrode (2) is designed in the form of an aluminium layer of a weight of no more than 0.05 mg/cm².

3. Ionization chamber according to Claim 1 or 2, in which the chamber wall (1) contains no more than 10% aluminium by weight as an additive.

4. Ionization chamber according to Claim 1 or 2, in which the chamber wall (1) contains aluminium oxide and carbon as additives, with aluminium oxide accounting for no more than 20% by weight of the additive mixture.

5. Ionization chamber according to Claim 1 or 2, in which the chamber wall (1) contains no more than 5% calcium oxide by weight as an additive.

6. Ionization chamber according to any of Claims 1 to 5, in which a radioactive check source (19), in particular a check source with ²⁴¹Am, can be positioned inside the internal electrode (10) from outside.

7. Ionization chamber according to Claim 6, in which a guide tube (16), electrically shielded by means of a shield tube (17), is provided for positioning the check source (19) in the internal electrode.

8. Ionization chamber according to any of Claims 1 to 7, in which the chamber wall (1) is designed as a hollow sphere and the internal electrode (10) is designed as an electrically conducting coating on a sphere (15), preferably hollow, that is concentric with the chamber wall.

### Revendications

1. Chambre d'ionisation remplie d'air, utilisable comme étalon secondaire, pour la mesure de la dose de rayons X et gamma, consistant en une chambre (1) avec une ouverture d'équilibrage atmosphérique dans la paroi de l'enceinte autrement étanche de toutes parts, une électrode extérieure (2), une électrode intérieure (10) et un anneau de garde (4) fermant le col (3) de la chambre (1), caractérisée en ce que

a) la paroi de la chambre épaisse de 3 mm au maximum consiste en un matériau contenant au moins 85% en poids de polyacétal ou un mélange de polyacétal et polytétrafluoréthylène dans lequel le polytétrafluoréthylène entre dans le rapport pondéral de 20% au maximum;

b) on ajuste l'équivalence à l'air, au tissu ou à l'eau de la chambre d'ionisation, par adjonction d'additifs au matériau formant la paroi de l'enceinte, dans la proportion pondérale de 15% au maximum, sous forme d'oxyde de calcium et/ou d'aluminium et/ou d'alumine et/ou de carbone;

c) l'électrode extérieure (2) est déposée sous forme de revêtement sur la face intérieure de la paroi de la chambre (1) et

d) consiste en un matériau contenant au moins un élément dont le numéro atomique est supérieur à 8 afin de compenser les pertes par absorption de photons de faible énergie, et

e) la section terminale du revêtement électroconducteur servant d'électrode intérieure (10) pénètre dans le col (3) sur une tige (6) non électroconductrice traversant axialement le col (3) et l'électrode extérieure (2) pénètre dans le col (3) en dépassant l'électrode intérieure (10) d'une longueur donnée et un revêtement (7) électrodeconducteur relié électriquement à l'anneau de garde (4), mais isolé électriquement de l'électrode intérieure (10), déposé sur la partie de la tige (6) se trouvant dans le col (3) de la chambre se superpose partiellement à la partie de l'électrode (2) arrivant dans le col (3) de la chambre.

2. Chambre d'ionisation selon la revendication 1 caractérisée en ce que l'électrode extérieure (2) se présente sous la forme d'une couche d'aluminium dont la masse volumique n'est pas supérieure à 0,05 mg/cm².

3. Chambre d'ionisation selon la revendication 1 ou 2 caractérisée en ce que la paroi de l'enceinte (1) contient au maximum 10% en poids d'aluminium en tant qu'additif.

4. Chambre d'ionisation selon la revendication 1 ou 2 caractérisée en ce que la paroi de l'enceinte (1) contient en tant qu'additifs de l'alumine et du carbone, l'alumine entrant dans la proportion pondérale de 20% au maximum dans la composition des additifs.

5. Chambre d'ionisation selon la revendication 1 ou 2 caractérisée en ce que la paroi de l'enceinte (1) contient au maximum 5% en poids d'oxyde de calcium en tant qu'additif.

6. Chambre d'ionisation selon une des revendications 1 à 5 caractérisée en ce qu'une source de contrôle radioactive (19) en particulier une source de contrôle consistant en $^{241}$Am peut être introduite de l'extérieur, à l'intérieur de l'électrode intérieure (10).

7. Chambre d'ionisation selon la revendication 6 caractérisée en ce qu'un tube de guidage (16) isolé électriquement par un tube de garde (17) permet d'introduire la source de contrôle (19) dans l'électrode intérieure (10).

8. Chambre d'ionisation selon une des revendications 1 à 7 caractérisée en ce que la paroi de l'enceinte (1) a la forme d'une sphère creuse et l'électrode intérieure (10) est exécutée sous forme de revêtement électroconducteur sur une sphère (15) préférentiellement creuse, concentrique à la paroi de l'enceinte.

Fig. 1 Schematische Darstellung eines Ausführungsbeispieles
der erfindungsgemäßen Ionisationskammer

**Fig. 2**

Vergrößerter Ausschnitt
aus dem Halsteil der
erfindungsgemäßen
Ionisationskammer

9

8

3

6

**Fig. 3**

Halsteil einer herkömmlichen Ionisationskammer

10

14

4

6

**Fig. 4**

Feldverzerrungen
bei einer herkömmlichen
Ionisationskammer

10

6

14

4

Vorrichtung zum Einbringen eines Prüfstrahlers
in eine kugelförmige Ionisationskammer

Fig. 5